# EUROPEAN PATENT APPLICATION

(11) **EP 4 826 804 A2**
(43) Date of publication of application: **21.10.2026**
(21) Application number: 26202816.0
(22) Date of filing: 26.09.2023
(51) Int. Cl.: H01M 4/62

(54) **NEGATIVE ELECTRODE AND SECONDARY BATTERY**

(30) Priority: 30.09.2022 KR 20220125384
(62) Document number(s) of the earlier application(s) in accordance with Art. 76 EPC: 23199856.8 / 4 345 935
(71) Applicant: LG Energy Solution, Ltd., Seoul 07335 (KR)
(72) Inventor: KIM, Shulkee, 34122 DAEJEON (KR); LEE, Gyeongseop, 34122 DAEJEON (KR); KIM, Minsoo, 34122 DAEJEON (KR); PARK, Kyutae, 34122 DAEJEON (KR); PIAO, Lilin, 34122 DAEJEON (KR); BAEK, Sora, 34122 DAEJEON (KR); YOO, Kwang Ho, 34122 DAEJEON (KR); JUNG, Wonhee, 34122 DAEJEON (KR)
(74) Representative: Plasseraud IP

(57) **Abstract**

Disclosed (or Provided) are a negative electrode for a secondary battery, including: a current collector; a first negative electrode active material layer provided on the current collector; and a second negative electrode active material layer provided on the first negative electrode active material layer, in which at least one of the first and second negative electrode active material layers includes a lithium-substituted carboxymethyl cellulose, wherein the first negative electrode active material layer comprises a carbon-based active material, and wherein only the second negative electrode active material layer comprises a silicon-based active material.

## Description

### TECHNICAL FIELD

The present invention relates to a negative electrode for a secondary battery and a secondary battery including the same.

### BACKGROUND ART

Secondary batteries are universally applied not only to portable devices but also to electric vehicles (EVs) and hybrid electric vehicles (HEVs), which are driven by electric driving sources.

Since such a secondary battery has not only the primary advantage of being able to dramatically reduce the use of fossil fuels, but also the advantage of not generating any by-products caused by the use of energy, the secondary battery is attracting attention as a new energy source that is environmentally friendly and improves energy efficiency.

In general, a secondary battery includes a positive electrode, a negative electrode, a separator interposed between the positive electrode and the negative electrode, an electrolyte, and the like. Further, an electrode such as a positive electrode and a negative electrode may have an electrode active material layer provided on a current collector.

While the utilization of secondary batteries increases, different battery performance characteristics are required. Although attempts have been made to add additives to the active material layer in order to improve battery performance and the sustainability thereof, some type of performance of the battery may be improved depending on the type of additive, but some other type of performance may rather deteriorate. Therefore, there is a need for research on the selection or combination of materials suitable for maintaining or improving the performance of a secondary battery while maintaining or improving the sustainability thereof.

### BRIEF DESCRIPTION OF THE INVENTION

The present invention refers to a negative electrode for a secondary battery, providing a secondary battery with improved charging performance, while maintaining an excellent service life, and a secondary battery including the same, providing in this manner a secondary battery comprising more sustainable product characteristics.

An aspect of the present invention refers to a negative electrode for a secondary battery, including:
a current collector;
a first negative electrode active material layer provided on the current collector; and
a second negative electrode active material layer provided on the first negative electrode active material layer,
wherein one or two of the first and second negative electrode active material layers includes a lithium-substituted carboxymethyl cellulose,
wherein the first negative electrode active material layer comprises a carbon-based active material, and wherein only the second negative electrode active material layer comprises a silicon-based active material.

Another embodiment of the present invention provides a secondary battery including the negative electrode for a secondary battery, a positive electrode and a separator.

According to the embodiments described in the present specification, the two-layer structure of the negative electrode active material layer including the silicon-based active material only in second negative electrode active material layer and the addition of a lithium-substituted carboxymethyl cellulose in one or two of the two negative electrode active material layers can significantly improve the charging performance of the battery while maintaining an excellent battery service life performance, thereby improving the sustainability of the battery.

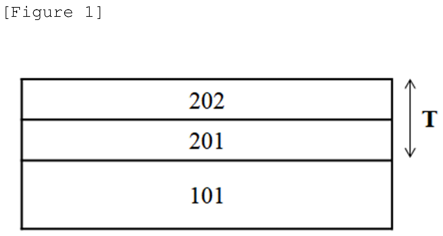

Since a silicon-based active material may have low electrical conductivity (due to the intrinsic electrical conductivity properties of the material itself) compared to a carbon-based active material, the uniform distribution of the silicon-based active material in the thickness direction (Figure 1, T) of the negative electrode active material layer may be adverse for charging performance (quick charging) because non-uniformity of the entire electrode may be induced in terms of electrical conductivity. However, when the silicon-based active material is included only in the second negative electrode active material layer in a two-layered structure (layer 202 illustrated in Figure 1), being said second negative electrode active material layer disposed onto a first negative electrode active material layer (layer 201 illustrated in Figure 1) comprising carbon-based active material provided on the current collector (101), results in that the silicon-based material is not uniformly distributed in the thickness direction (T). Moreover, since the silicon-based material does not diffuse from the second layer (layer 202) towards the first layer (layer 201), the non-uniform distribution of this material may be maintained after manufacturing of the secondary battery. In this manner, the electrical conductivity is increased, and then the contact resistance between each layer is decreased. In addition, the above effect can be maximized by additionally adding a lithium-substituted carboxymethyl cellulose, which has high electrical/ion mobility of Li, in one or in two of the two negative electrode active material layers. Indeed, when lithium-substituted carboxymethyl cellulose is added in at least one of the two negative electrode active material layers, the mobility of Li ions is increased, so that the service life durability, which slightly deteriorates when silicon-based active material is included can also be generally maintained, avoiding also the adverse effects in charging performance found when the silicon-based material is included uniformly in the entire negative electrode.

In particular, during fast charging, the anode/separator interface experiences a larger ionic flux of lithium ions than in standard charging. If the negative electrode active material can quickly accept the larger ionic flux of lithium ions, the fast charging performance of the cell can be improved.

Since the silicon-based active material accepts lithium ions through alloying and charging starts from a lower potential, the fast charging performance is improved compared to graphite-based negative electrode active materials that accept lithium ions through intercalation.

The inventors discovered that by placing such a silicon-based active material close to the positive electrode, which is the direction in which the lithium ion flux is first received, that is, by placing it on the upper layer (the second negative electrode active material layer), the silicon-based active material reacts quickly with lithium ions to greatly improve fast charging performance.

### BRIEF DESCRIPTION OF THE FIGURES

Figure 1: Schematic cross-section view of a negative electrode according to the present invention comprising a current collector (101), a first negative-electrode active material layer (201) and a second negative-electrode active material layer (202). The thickness direction is indicated as T.

### DETAILED DESCRIPTION

Hereinafter, the present invention will be described in more detail in order to help the understanding of the present invention. The present invention can be implemented in various different forms, and is not limited to the embodiments described herein. In this case, terms or words used in the specification and the claims should not be interpreted as being limited to typical or dictionary meanings and should be interpreted with a meaning and a concept can appropriately define a concept of a term in that are consistent with the technical spirit of the present invention based on the principle that an inventor order to describe his/her own invention in the best way.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

When the term "about" is used, it may be referred to a value which may vary for example, ±10% of defined value, ±5% of the defined value, ±1% of the defined value, or ±0.1% of the defined value.

A case where a part such as a layer is present "above" or "on" another part includes a case where the part is present "immediately above" another part, and also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

When referring to the "upper layer", or to the "upper negative electrode active material layer", it is to be understood that the "upper layer" is the layer disposed farther from the current collector, meaning that the upper layer is the second negative electrode active material layer which is disposed onto the first negative electrode active material layer, being said first negative electrode active material layer disposed onto the current collector. In an analogous manner, when referring to the "lower layer", or to the "lower negative electrode active material layer", it is to be understood that the "upper layer" is the layer disposed closer from the current collector, meaning that the lower layer is the first negative electrode active material layer which is disposed onto the current collector.

In the present specification, a description that refers only to the "negative electrode active material layer" without referring to either the first or the second layer is to be understood that said description may be applied to both the first and second negative electrode active material layers.

The negative electrode for a secondary battery according to an embodiment of the present specification includes: a current collector; a first negative electrode active material layer provided on the current collector; and a second negative electrode active material layer provided on the first negative electrode active material layer, one or two of the first and second negative electrode active material layers comprises a lithium-substituted carboxymethyl cellulose, wherein the first negative electrode active material layer comprises a carbon-based active material, and wherein only the second negative electrode active material layer comprises a silicon-based active material. In other words, the negative electrode for a secondary battery comprises two layers, including a lithium-substituted carboxymethyl cellulose in one or in two of the two layers, wherein the first negative electrode active material layer, provided on the current collector, comprises a carbon-based active material, and wherein only the second negative electrode active material layer, provided on the first negative electrode active material layer, comprises a silicon-based active material. Distribution of the silicon-based active material can be confirmed through a SEM image of the cross-section of the electrode. Therefore, the region where the silicon-based active material exists can be defined as the second negative electrode active material layer. Figure 1 shows an example of an anode (negative electrode) according to the invention comprising a first negative electrode active material layer 201, a second negative electrode active material layer 202, and a current collector 101.

The present inventors found that adding lithium-substituted carboxymethyl cellulose in one or in both negative electrode active material layers (201, 202) is advantageous for improving the charging performance and securing the service life performance of the battery when compared to a battery in which sodium carboxymethyl cellulose is added in the negative electrode active material layer. In particular, the use of a lithium-substituted carboxymethyl cellulose in one or more of the two layers (201, 202) of a double-layered structure of a negative electrode active material layer in combination with a silicon-based active material present in only the second negative electrode active material layer (202), improves the charging performance while maintaining an excellent service life of the battery (which slightly deteriorates when a silicon-based active material is included) can be further maximized thereby providing a more sustainable secondary battery.

The lithium-substituted carboxymethyl cellulose may be included in both the first negative electrode active material layer (201) and the second negative electrode active material layer (202), and may be included in the first layer of the first negative electrode active material layer (201) or in the second negative electrode active material layer (202). For example, the lithium-substituted carboxymethyl cellulose may be included in a greater amount in the second anode active material layer than in the first anode active material layer, or may be included only in the second anode active material layer. In an embodiment, one or more layers include a lithium-substituted carboxymethyl cellulose, whereas sodium-substituted carboxymethyl cellulose is not included at all. In addition to the lithium-substituted carboxymethyl cellulose included in one or two of the first and second negative electrode active material layers, a sodium-substituted carboxymethyl cellulose may also be further included. For example, one of the first and second negative electrode active material layers includes a lithium-substituted carboxymethyl cellulose, and the other may include a sodium-substituted carboxymethyl cellulose. In some embodiments, lithium-substituted carboxymethyl cellulose and sodium-substituted carboxymethyl cellulose are the only carboxymethyl cellulose salts included in the electrode.

In an embodiment of the present specification, the silicon-based active material includes one or more of SiOx (0≤x<2), SiMy (M is a metal, 1≤y≤4), and Si/C. Only one type of the silicon-based active material may be included, or two or more types may be included together.

In an embodiment of the present specification, the second negative electrode active material layer including the silicon-based active material may further include a carbon-based active material.

In an embodiment of the present specification, the silicon-based active material may be included in an amount of 1 part by weight to 40 parts by weight, such as, 2 part by weight to 20 parts by weight, 3 part by weight to 35 parts by weight, 4 part by weight to 30 parts by weight, 5 part by weight to 25 part by weight, 7 part by weight to 15 part by weight, based on total 100 parts by weight of the active materials included in the second negative electrode active material layer including the silicon-based active material.

According to the present specification, the first negative electrode active material layer includes a carbon-based active material, and only the second negative electrode active material layer includes a silicon-based active material. Thus, the first negative electrode active material layer, provided on the current collector, does not include a silicon-based active material.

The active material containing SiOₓ (0≤x<2) as the silicon-based active material may be a silicon-based composite particle including SiOₓ (0<x<2) and pores.

According to the present disclosure, the term composite particle, when referred to particles of a silicon-based active material, refers to particles comprising a silicon-based active material composite, optionally other elements or compounds, and pores. According to the present disclosure, a composite refers to two or more materials which are physically aggregated but not chemically bonded.

The silicon-based composite particles comprise a SiOₓ (0<x<2) matrix including Si and SiO₂, wherein the Si may also form a separate phase inside the SiOₓ matrix. That is, the x corresponds to the number ratio of O for each Si included in the SiOₓ (0<x<2). Having a silicon-based active material containing SiOₓ (0≤x<2) may improve the discharge capacity of a secondary battery.

The silicon-based composite particles may further include one or more of a Mg compound and a Li compound. The Mg compound and Li compound may be included into a matrix in the silicon-based composite particle.

The Mg compound and/or Li compound may be dispersed inside and/or on the surface of the SiOₓ (0<x<2). The initial efficiency of the battery may be improved by the Mg compound and/or Li compound.

The Mg compound may include at least any one selected from the group consisting of Mg silicates, Mg silicides and Mg oxides. The Mg silicate may include at least any one selected from the group consisting of Mg₂SiO₄ and MgSiO₃. The Mg silicide may include Mg₂Si. The Mg oxide may include MgO.

In an embodiment of the present specification, the Mg element may be included in an amount of 0.1 wt% to 20 wt%, or 0.1 wt% to 10 wt% based on total 100 wt% of the silicon-based active material. Specifically, the Mg element may be included in an amount of 0.1 wt% to 20 wt%, 0.2 wt% to 15 wt%, 0.3 wt% to 10 wt%, 0.4 wt% to 9 wt%, 0.5 wt% to 8 wt%, 0.6 wt% to 7 wt%, 0.7 wt% to 6 wt%, 0.8 wt% to 5 wt%, or 0.8 wt% to 4 wt%. Having an amount of the Mg element satisfying the above range, results in that the content of the Mg compound included in the silicon-based active material is appropriate, so that the volume change of the silicon-based active material during the charging and discharging of a battery may be readily suppressed, and so that the discharge capacity and initial efficiency of the battery may be improved.

The Li compound may include at least any one compound selected from the group consisting of Li silicates, Li silicides and Li oxides. The Li silicate may include at least any one selected from the group consisting of Li₂SiO₃, Li₄SiO₄ and Li₂Si₂O₅. The Li silicide may include Li₇Si₂. The Li oxide may include Li₂O.

In an embodiment of the present invention, the Li compound may include the form of a lithium silicate. The lithium silicate is represented by the formula LiₐSi_{b}O_{c} (2≤a≤4, 0<b≤2, 2≤c≤5) and may be classified into crystalline lithium silicate and amorphous lithium silicate. The crystalline lithium silicate in the silicon-based composite particles may be present in the form of one or more of lithium silicates selected from the group consisting of Li₂SiO₃, Li₄SiO₄ and Li₂Si₂O₅, and the amorphous lithium silicate may be in the form of LiₐSi_{b}O_{c} (2≤a≤4, 0<b≤2, 2≤c≤5)
In an embodiment of the present specification, the Li element may be included in an amount of 0.1 wt% to 20 wt%, or 0.1 wt% to 10 wt% based on total 100 wt% of the silicon-based active material. Specifically, the Li element may be included in an amount of 0.1 wt% to 20 wt%, 0.2 wt% to 15 wt%, 0.3 wt% to 10 wt%, 0.4 wt% to 9 wt%, 0.5 wt% to 8 wt%, 0.6 wt% to 7 wt%, 0.7 wt% to 6 wt%, 0.8 wt% to 5 wt%, more specifically 0.5 wt% to 4 wt%. Having an amount of the Li element satisfying the above range, results in that the content of the Li compound included in the silicon-based active material is appropriate, so that the volume change of the negative electrode active material during the charging and discharging of a battery may be readily suppressed, and so that the discharge capacity and initial efficiency of the battery may be improved.

The content of the Mg element or the content of the Li element may be confirmed by ICP (Inductively Coupled Plasma) analysis. For the ICP analysis a sample of the negative active material is obtained by, aliquoting a predetermined amount (for example, 0.01 g) of the negative electrode active material, subsequently the negative electrode active material of the sample is decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid of a known concentration prepared using a standard solution of the Mg compound and the Li compound(5 mg/kg) at an intrinsic wavelength of the Mg element or the Li element using an inductively coupled plasma atomic emission spectrometer (ICPAES, Perkin-Elmer 7300). Thereafter, the previously pre-treated sample solution and a blank sample are each introduced into the apparatus, an actual intensity is calculated by measuring each intensity, the concentration of each compound relative to the prepared calibration curve is calculated, and then the contents of the Mg element or the Li element of the prepared silicon-based active material may be analyzed by converting the total sum so as to be the theoretical value.

In an embodiment of the present specification, a carbon coating layer may be provided on the surface and/or inside pores of the silicon-based composite particles. The carbon coating layer, as herein disclosed, imparts electrical conductivity to the silicon-based composite particles, resulting in that the initial efficiency, service life characteristics, and battery capacity characteristics of a secondary battery including the negative electrode active material comprising the silicon-based composite particles may be improved. The total weight of the carbon coating layer may be included in an amount of 5 wt% to 40 wt%, 10 wt% to 30 wt%, 15 wt% to 20 wt%, based on total 100 wt% of the silicon-based composite particles.

In an embodiment of the present specification, the carbon coating layer may include at least any one of amorphous carbon and crystalline carbon.

The silicon-based composite particles may have an average particle diameter (D₅₀) of 2 µm to 15 µm, specifically 3 µm to 12 µm, and more specifically 4 µm to 10 µm. When the silicon-based composite particles have an average particle diameter (D₅₀) satisfying the above range, side reactions between the silicon-based composite particles and an electrolyte solution of the secondary battery may be controlled, and the discharge capacity and initial efficiency of the battery may be effectively implemented.

In the present specification, an average particle diameter (D₅₀) may be defined as a particle diameter corresponding to 50% of a cumulative volume in a particle diameter distribution curve of the particles. The average particle diameter (D₅₀) may be measured using, for example, a laser diffraction method. The laser diffraction method can generally measure a particle diameter of about several mm from the submicron region, and results with high reproducibility and high resolution may be obtained.

The silicon-based active material including Si/C is a composite particle of silicon(Si) and carbon(C), and is to be distinguished from silicon carbide denoted as SiC. The silicon carbon composite particle may be a composite of silicon, graphite, , and may also form a structure in which a core of silicon and graphite composite is surrounded by graphene or amorphous carbon. In the silicon carbon composite, the silicon may be nano-silicon, which is a nano-sized particle of silicon dispersed in the silicon carbon composite. The active material including Si/C may have an average particle diameter (D₅₀) of 2 µm to 15 µm, specifically 3 µm to 12 µm, and more specifically 4 µm to 10 µm. A carbon coating layer may be provided on the surface of the active material composite particle including Si/C.

In an embodiment of the present specification, the carbon-based active material may be graphite, and the graphite may be natural graphite, artificial graphite, or a mixture thereof. Based on 100 parts by weight of the total weight of the first and second negative electrode active material layers, the first negative electrode active material layer may comprise an amount of 80 parts by weight or more and 99.8 parts by weight or less of carbon-based negative electrode active material, for example 90 to 99 parts by weight, for example 93 to 97 parts by weight. Based on total 100 parts by weight of the active materials included in the second negative electrode active material layer, the second negative electrode active material layer may comprise an amount of 60 parts by weight or more and 99 parts by weight or less of carbon-based negative electrode active material, for example from 75 parts by weight or more and 98 parts by weight or less, for example from 85 parts by weight or more and 95 parts by weight or less.

In some embodiments, the negative electrode active material layer may comprise other ingredients or compounds, such as a binder or a conductive material, in addition to the negative active materials. In an embodiment of the present specification, the negative electrode active material in 100 parts by weight of the negative electrode active material layer may be included in an amount of 80 parts by weight or more and 99.8 parts by weight or less, for example from 85 parts by weight to 98 parts by weight, from 90 parts by weight to 95 parts by weight, preferably 93 parts by weight or more and 99.8 parts by weight or less, and more preferably 95 parts by weight or more and 98 parts by weight or less.

In an embodiment of the present specification, one or both of the first and second negative electrode active material layers include a lithium-substituted carboxymethyl cellulose.

In the lithium-substituted carboxymethyl cellulose, the degree of substitution of a hydroxy (-OH) group by a lithium carboxymethyl group (-CH₂COOLi) may be 0.1 or more, for example, 0.5 or more, specifically 0.7 to 1.3, or 0.8 to 1.2, and more particularly 0.8 to 1.0.

The lithium-substituted carboxymethyl cellulose may have a molecular weight (Mn) of 300,000 to 1,000,000, for example, 350,000 to 900,000, from 450,000 to 800,000, from 500,000 to 700,000, and particularly from 500,000 to 900,000.

The lithium-substituted carboxymethyl cellulose may also be included in a negative electrode active material layer including a silicon-based active material, and may also be included in a negative electrode active material layer including only a carbon-based active material without including a silicon-based active material. The lithium-substituted carboxymethyl cellulose may also be included in the second a negative electrode active material layer including a silicon-based active material and carbon-based active material.

The lithium-substituted carboxymethyl cellulose may also be included only in the first negative electrode active material layer, only in the second negative electrode active material layer, or in both the first negative electrode active material layer and the second negative electrode active material layer.

The lithium-substituted carboxymethyl cellulose may be included in an amount of 0.1 to 5 parts by weight, for example, 0.1 to 3 parts by weight, 0.2 to 3 parts by weight, 0.3 to 2 parts by weight, 0.5 to 1 parts by weight based on 100 parts by weight of the total weight of the first and second negative electrode active material layers. The lithium-substituted carboxymethyl cellulose may be included in an amount of 0.1 to 5 parts by weight, for example, 0.1 to 3 parts by weight, 0.2 to 3 parts by weight, 0.3 to 2 parts by weight, 0.5 to 1 parts by weight, based on 100 parts by weight of the weight of the first negative electrode active material layer or second negative electrode active material layer including the lithium-substituted carboxymethyl cellulose.

According to an additional embodiment of the present specification, the negative electrode active material layer may further include a negative electrode binder in addition to the silicon-based active material and the carbon-based active material.

The negative electrode binder may serve to improve the bonding between negative electrode active material particles and the adhesion between the negative electrode active material particles and the negative electrode current collector. As the negative electrode binder, those known in the art may be used, and non-limiting examples thereof may include at least any one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder may be included in an amount of 0.1 parts by weight or more and 19.9 parts by weight or less, for example, 0.2 parts by weight or more or 18 parts by weight or less, 0.3 parts by weight or more or 16 parts by weight or less, 0.4 parts by weight or more or 14 parts by weight or less, 0.5 parts by weight or more or 12 parts by weight or less, 0.6 parts by weight or more or 10 parts by weight or less, preferably 0.3 parts by weight or more and 20 parts by weight or less, and more preferably 0.5 parts by weight or more and 10 parts by weight or less, based on 100 parts by weight of the negative electrode active material layer.

The negative electrode active material layer may not include a conductive material, but may further include a conductive material, if necessary. The conductive material included in the negative electrode active material layer is not particularly limited as long as the conductive material has electrical conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a fluorocarbon powder, an aluminum powder, and a nickel powder; a conductive whisker such as zinc oxide and potassium titanate; a conductive metal oxide such as titanium oxide; a conductive material such as polyphenylene derivatives, and the like. The content of the conductive material in the negative electrode active material layer may be 0.01 parts by weight to 19.9 parts by weight, 0.05 parts by weight to 18 parts by weight, 0.10 parts by weight to 16 parts by weight, 0.50 parts by weight to 14 parts by weight, 1.50 parts by weight to 12 parts by weight, 3 parts by weight to 10 parts by weight, 5 parts by weight to 8 parts by weight, preferably 0.03 parts by weight to 18 parts by weight, based on 100 parts by weight of the negative electrode active material layer.

For the purposes of the present disclosure, when the carbon-based active material is graphite, such as natural graphite or artificial graphite, the parts by weight of the graphite used as carbon-based active material are not to be taken into consideration when defining the total parts by weight of conductive material. In an analogous manner, when the conductive material selected according for the negative electrode is graphite, the parts by weight of conductive material described are not to be included when defining the total parts by weight of carbon-based negative electrode active material. Accordingly, when graphite is selected both as carbon-based negative electrode active material and as negative electrode conductive material, the total parts by weight of graphite correspond to the addition of the parts by weight of graphite used as carbon-based negative electrode active material and of the parts by weight of graphite used as negative electrode conductive material.

The conductive material included in the negative electrode active material layer is, for example, carbon black such as acetylene black, Ketjen black, channel black, furnace black, lamp black, and thermal black; a conductive fiber such as carbon fiber or metal fiber; a conductive tube such as a carbon nanotube.

In an embodiment of the present specification, each of the first and second negative electrode active material layers may have a thickness of 30 µm or more and 100 µm or less, for example, 35 µm or more and 90 µm or less, 40 µm or more and 80 µm or less, 45 µm or more and 75 µm or less, 50 µm or more and 60 µm or less. The sum of the thicknesses of the first and second negative electrode active material layers may be 90 µm or more and 150 µm or less, 100 µm or more and 140 µm or less, 110 µm or more and 130 µm or less.

In an embodiment of the present application, the negative electrode current collector is sufficient as long as the negative electrode current collector has electrical conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 µm to 50 µm, for example 2 µm to 40 µm, 5 µm to 30 µm, 10 µm to 20 µm, the thickness of the current collector is not limited thereto.

An additional embodiment of the present specification provides a secondary battery including the negative electrode according to the above-described embodiment, a positive electrode, and a separator.

In an embodiment of the present specification, the positive electrode includes a positive electrode current collector and a positive electrode active material layer formed on the positive electrode current collector, the positive electrode active material layer including a positive electrode active material. The positive electrode active material layer may have a thickness of 20 µm or more and 500 µm or less, 50 µm or more and 300 µm or less, 100 µm or more and 250 µm or less.

The positive electrode current collector is not particularly limited as long as the collector has electrical conductivity without causing a chemical change to a battery, and for example, it is possible to use stainless steel, aluminum, nickel, titanium, calcined carbon, or aluminum or stainless steel whose surface is treated with carbon, nickel, titanium, silver, and the like. Further, the positive electrode current collector may typically have a thickness of 1 to 50 µm, for example 2 µm to 40 µm, 5 µm to 30 µm, 10 µm to 20 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

In an embodiment of the present specification, the positive electrode may include a lithium composite transition metal compound, including nickel (Ni) and cobalt (Co), as an active material. The lithium composite transition metal compound may further include one or both of manganese and aluminum. The lithium composite transition metal compound may include 80 mol% or more, for example, 80 mol% or more and less than 100 mol% of nickel among metals except for lithium.

In an embodiment, the positive electrode active material in 100 parts by weight of the positive electrode active material layer may be included in an amount of 80 parts by weight or more and 99.9 parts by weight or less, 90 parts by weight or more and 99 parts by weight or less, 95 parts by weight or more and 98 parts by weight or less, preferably 90 parts by weight or more and 99.9 parts by weight or less, and more preferably 95 parts by weight or more and 99.9 parts by weight or less.

According to an additional embodiment of the present specification, the positive electrode active material layer according to the above-described embodiment may further include a positive electrode binder and a conductive material.

The positive electrode binder may serve to improve the bonding between positive electrode active material particles and the adhesion between the positive electrode active material particles and the positive electrode current collector. As the positive electrode binder, those known in the art may be used, non-limiting examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.1 parts by weight or more and 20 parts by weight or less, for example, preferably 0.3 parts by weight or more and 18 parts by weight or less, and more preferably 0.5 parts by weight or more and 15 parts by weight or less, based on 100 parts by weight of the positive electrode active material layer.

The conductive material included in the positive electrode active material layer is used to impart electrical conductivity to the electrode, and can be used without particular limitation as long as the conductive material has electrical conductivity without causing a chemical change in a battery. Specific examples thereof include graphite such as natural graphite or artificial graphite; a carbon-based material such as carbon black, acetylene black, Ketjen black, channel black, furnace black, lamp black, thermal black, carbon fiber, and carbon nanotubes; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used. Specifically, in an embodiment, the conductive material may include one or more of a single-walled carbon nanotube (SWCNT); and a multi-walled carbon nanotube (MWCNT).

The conductive material may be included in an amount of **0.1** parts by weight or more and 10 parts by weight or less, for example, preferably 0.2 parts by weight or more and 7 parts by weight or less, and more preferably 0.3 parts by weight or more and 5 parts by weight or less, based on 100 parts by weight of a composition for the positive electrode active material layer.

According to an embodiment, the sum of weights of the first and second negative electrode active material layers of the negative electrode may be 170 to 280 mg/25 cm². Here, the weight is a value based on the weight after drying(solid content) except for the solvent. This range is advantageous for high energy density and quick charging characteristics.

The positive electrode and the negative electrode may be manufactured by a method for manufacturing a positive electrode and a negative electrode in the related art, except that the aforementioned positive electrode and negative electrode active materials are used. Specifically, after a composition for forming an active material layer, which includes the aforementioned active material and, optionally, a binder and a conductive material is applied onto current collectors, the positive electrode and negative electrode may be manufactured by drying and rolling the current collectors. In this case, the types and contents of the positive and negative electrode active materials, binders, and conductive materials are as described above. The solvent may be a solvent commonly used in the art, examples thereof include dimethyl sulfoxide (DMSO), isopropyl alcohol, N-methylpyrrolidone (NMP), acetone, water, or the like, and among them, any one thereof or a mixture of two or more thereof may be used. The amount of solvent used is sufficient as long as the solvent in the amount dissolves or disperses the active material, conductive material and binder in consideration of the application thickness of the slurry and preparation yield, and has a viscosity capable of exhibiting excellent thickness uniformity during subsequent application for manufacturing the positive electrode and the negative electrode. Alternatively, by another method, the positive electrode and the negative electrode may be manufactured by casting the composition for forming an active material layer on a separate support and then laminating a film obtained by performing peel-off from the support on a current collector.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, ethylene carbonate and propylene carbonate which are cyclic carbonates may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electrical conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of F-, Cl-, I-, NO₃-, N(CN)₂-, BF₄-, ClO₄-, PF₆-, (CF₃)₂PF₄-, (CF₃)₃PF₃-, (CF₃)₄PF₂-, (CF₃)₅PF-, (CF₃)₆P-, CF₃SO₃-, CF₃CF₂SO₃-, (CF₃SO₂)₂N-, (FSO₂)₂N-, CF₃CF₂(CF₃)₂CO-, (CF₃SO₂)₂CH-, (SF₅)₃C-, (CF₃SO₂)₃C-, CF₃(CF₂)₇SO₃-, CF₃CO₂-, CH₃CO₂-, SCN- and (CF₃CF₂SO₂)₂N-.

For the purposes of improving the service life characteristics of a battery, suppressing the decrease in battery capacity, and improving the discharge capacity of the battery, thereby improving the sustainability of the battery, one or more additives may be further included in addition to the above electrolyte constituent components, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride.

The secondary battery according to an embodiment of the present invention includes an assembly including a positive electrode, a negative electrode, a separator and an electrolyte, and may be a lithium secondary battery.

The secondary battery according to an embodiment of the present invention may be also defined as a unit cell. In that regard, an additional embodiment of the present invention provides a battery module including the above-described secondary battery as a unit cell and a battery pack including the same. The battery module and the battery pack include the secondary battery which has high capacity, high rate properties and cycle properties, and thus, may be used as a power source of a medium-and-large sized device selected from the group consisting of an electric vehicle, a hybrid electric vehicle, a plug-in hybrid electric vehicle, and a power storage system.

Since the secondary battery according to embodiments of the present invention stably exhibits excellent discharge capacity, output characteristics, and cycle performance, the secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.
The present disclosure also refers to the following items:
Item 1. A negative electrode for a secondary battery, comprising: a current collector;
   a first negative electrode active material layer provided on the current collector; and
   a second negative electrode active material layer provided on the first negative electrode active material layer,
   wherein one or two of the first and second negative electrode active material layers comprises a lithium-substituted carboxymethyl cellulose,
   wherein the first negative electrode active material layer comprises a carbon-based active material, and
   wherein only the second negative electrode active material layer comprises a silicon-based active material.
Item 2. The negative electrode according to item 1, wherein the negative electrode active material layer comprising the silicon-based active material further comprises a carbon-based active material.
Item 3. The negative electrode according to any of items 1 or 2, wherein both the first negative electrode active material layer and the second negative electrode active material layer comprise a lithium-substituted carboxymethyl cellulose.
Item 4. The negative electrode according to any of items 1 to 3, wherein the carbon-based active material comprises one or both of artificial graphite and natural graphite.
Item 5. The negative electrode according to any of items 1 to 4, wherein the silicon-based active material comprises one or more of SiOx (0≤x<2), SiMy (M is a metal, 1≤y≤4), and Si/C.
Item 6. The negative electrode according to any of items 1 to 5, wherein the second negative electrode active material layer comprising the silicon-based active material comprises an amount of 1 part by weight to 40 parts by weight of silicon-based active material based on 100 parts by weight of the total active material comprised in the second negative electrode active material layer comprising the silicon-based active material.
Item 7. The negative electrode according to any of items 1 to 6, wherein the silicon-based active material comprises silicon-based composite particles including SiOₓ (0<x<2).
Item 8. The negative electrode according to item 7, wherein silicon-based composite particles further comprise one or more of a Mg compound and a Li compound.
Item 9. The negative electrode according to item 8, wherein the Mg compound is at least one selected from the group consisting of Mg silicates, Mg silicides and Mg oxides; and wherein the Li compound Li compound is at least any one selected from the group consisting of Li silicates, Li silicides and Li oxides.
Item 10. The negative electrode according to any of items 1 to 9, wherein the sum of weights of the first and second negative electrode active material layers is 170 to 280 mg/25 cm².
Item 11. The negative electrode according to any of items 1 to 9, wherein the first negative electrode active material layer comprises:
   an amount of 80 parts by weight or more and 99.8 parts by weight or less of carbon-based negative electrode active material; and
   an amount of 0.1 to 5 parts by weight of lithium-substituted carboxymethyl cellulose;
   the amounts based on 100 parts by weight of the total weight of the first and second negative electrode active material layers.
Item 12. The negative electrode according to any of items 1 to 9, wherein the second negative electrode active material layer comprises:
   an amount of 60 parts by weight or more and 99 parts by weight or less of carbon-based negative electrode active material, based on total 100 parts by weight of the active materials included in the second negative electrode active material layer;
   an amount of 1 part by weight to 40 parts by weight of the silicon-based active material, based on total 100 parts by weight of the active materials included in the second negative electrode active material layer; and
   an amount of 0.1 to 5 parts by weight of lithium-substituted carboxymethyl cellulose based on 100 parts by weight of the total weight of the first and second negative electrode active material layers.
Item 13. A secondary battery comprising the negative electrode according to any one of items 1 to 12, a positive electrode, and a separator.
Item 14. The secondary battery of item 10, wherein the positive electrode comprises a lithium composite transition metal compound comprising nickel (Ni) and cobalt (Co) as an active material.
Item 15. The secondary battery of item 11, wherein the lithium composite transition metal compound further comprises one or both of manganese and aluminum.

### Examples 1 to 3 and Comparative Examples 1 to 6

### <Manufacture of cell>

### Example 1.

### Manufacture of positive electrode

A lithium composite transition metal compound including nickel (Ni), cobalt (Co) and manganese (Mn) at an atomic ratio of 84:8:8 as a positive electrode active material and doped with aluminum (Al), a conductive material (CNT) and a binder (PVDF) at a weight ratio of 97 : 1 : 2 were put into a methylpyrrolidone (NMP) solvent to prepare a negative electrode slurry (a positive electrode slurry solid content was included in an amount of 70 parts by weight based on the entire positive electrode slurry).

The positive electrode slurry prepared above was applied on an Al current collector, dried, and then rolled at room temperature to manufacture a positive electrode.

### Manufacture of negative electrode

For a first negative electrode active material layer, a carbon-based active material (artificial graphite and natural graphite are included at a weight ratio of 8:2), a conductive material (carbon black), a binder (SBR) and a thickener (Li-CMC) were put into a distilled water solvent at a weight ratio of 96 : 1 : 2 : 1 to prepare a negative electrode slurry (the solid content of the negative electrode slurry is included in an amount of 50 parts by weight of the entire negative electrode slurry, including 50 parts by weight of water solvent).

For a second negative electrode active material layer, a negative electrode active material including a Mg-doped SiO active material and a carbon-based active material (artificial graphite and natural graphite are included at a weight ratio of 8:2) (the Mg-doped SiO active material is included in an amount of 5 parts by weight based on 100 parts by weight of the entire negative electrode active material (10 parts by weight based on 100 parts by weight of the negative electrode active material in the second negative electrode active material layer)), a conductive material (carbon black), a binder (SBR) and a thickener (Li-CMC) were put into a distilled water solvent at a weight ratio of 96 : 1 : 2 : 1 to prepare a negative electrode slurry (the solid content of the negative electrode slurry is included in an amount of 50 parts by weight of the entire negative electrode slurry, including 50 parts by weight of water solvent).

After the first negative electrode active material layer slurry prepared above was applied onto a Cu current collector, the second negative electrode active material layer slurry was sequentially applied onto the first negative electrode active material layer, the first and second negative electrode active material layers were dried simultaneously, and then rolled at room temperature to manufacture a negative electrode.

### Manufacture of cell

A separator was interposed between the positive electrode and the negative electrode manufactured as described above and assembled, and an electrolyte solution was injected, and then activated to manufacture a cell.
- Electrolyte solution composition: 1 M LiPF₆, ethylene carbonate (EC)/ethyl methyl carbonate (EMC) (volume ratio 3/7), vinylene carbonate (VC)/propane sultone (PS) (included in an amount of 3 parts by weight and **1.5** parts by weight, respectively in the electrolyte)
- Activation: 0.1 C, 3 hrs. Degas after high temperature/room temperature aging after charging

### Example 2.

An electrode and a cell were manufactured in the same manner as in Example 1, except that Na-CMC was used instead of Li-CMC as a slurry thickener for the first negative electrode active material layer.

### Example 3.

An electrode and a cell were manufactured in the same manner as in Example 1, except that Na-CMC was used instead of Li-CMC as a slurry thickener for the second negative electrode active material layer.

### Comparative Example 1.

An electrode and a cell were manufactured in the same manner as in Example 1, except that the slurry of the second negative electrode active material layer in Example 1 was used as the slurry of the first negative electrode active material layer to be first applied onto the Cu current collector, and the first negative electrode active material layer slurry in Example 1 was used as the slurry of the second negative electrode active material layer to be sequentially applied onto the first negative electrode active material layer.

### Comparative Example 2.

An electrode and a cell were manufactured in the same manner as in Example 1, except that a negative electrode active material layer including a Mg-doped SiO active material and a carbon-based active material (including artificial graphite and natural graphite at a weight ratio of 8:2) was used instead of the carbon-based active material of the first negative electrode active material layer slurry, and the Mg-doped SiO active material included in both the first negative electrode active material layer and the second negative electrode active material layer was included in an amount of 5 parts by weight based on 100 parts by weight of all the negative electrode active materials.

### Comparative Example 3.

An electrode and a cell were manufactured in the same manner as in Example 1, except that Na-CMC was used instead of Li-CMC as a slurry thickener for the first negative electrode active material layer and the second negative electrode active material layer.

### Comparative Example 4.

An electrode and a cell were manufactured in the same manner as in Comparative Example 1, except that only a carbon-based active material was used as a negative electrode active material in both the first negative electrode active material layer and second negative electrode active material layer slurries to manufacture a negative electrode.

### Comparative Example 5.

An electrode and a cell were manufactured in the same manner as in Comparative Example 2, except that the first negative electrode active material layer slurry in Comparative Example 2 was applied as a single layer onto the Cu current collector (the thickness of the single layer is the same as that of the first and second negative electrode active material layers of Comparative Example 2), and the second negative electrode active material layer was not formed.

### Comparative Example 6.

An electrode and a cell were manufactured in the same manner as in Comparative Example 2, except that Na-CMC was included instead of Li-CMC as the thickener of the first negative electrode active material layer slurry in Comparative Example 2, the slurry was applied as a single layer onto the Cu current collector, and the second negative electrode active material layer was not formed.

### Experimental Example 1. Cell resistance performance

The third discharge capacity was measured by constant current/constant voltage (CC/CV) charging (0.05 C-cut) and 0.33 C constant current (CC) discharging (2.5 V-cut) the manufactured cell three times to 4.2 V at 0.33 C. Thereafter, after charging as described above, the SOC was set to 50% by discharging at 0.33 C, and pulse discharging was performed at 2.5 C for 10 seconds to measure the resistance (initial resistance). The results are shown in the following Table 2.

### Experimental Example 2. Cell charge C-rate performance

The charging capacity according to the C-rate was measured by constant current/constant voltage (CC/CV) charging (0.05 C-cut), 0.33 C constant current (CC) discharging (2.5 V-cut) the manufactured cell to 4.2 V at each C-rate (0.1 C/2.0 C). Based on the measured charge capacity, the cell charge C-rate performance (2.0 C charge capacity/0.1 C charge capacity x 100) was calculated and shown in Table 2.

### Experimental Example 3. Cell high temperature cycle service life performance

Cycle was performed by constant current/constant voltage (CC/CV) charging (0.05 C-cut) and 0.33 C constant current (CC) discharging (2.5 V-cut) the manufactured cell to 4.2 V at 0.33 C at high temperature (45°C). After repeating the experiment 200 times, the capacity was measured in the same manner as in Experimental Example 1 to measure the capacity retention rate (capacity after 400 times/initial capacity x 100%). The high temperature cycle service life performance of cells of Examples 1 to 3 was measured as 96.0%, 95.5% and 94.9%, respectively.

**[Table 1]**

| | First negative electrode active material layer | | | Second negative electrode active material layer | | |
|---|---|---|---|---|---|---|
| | Graphite content (relative to total weight of active material) | Silicon-based active material content (relative to total weight of active material) | CMC | Graphite content (relative to total weight of active material) | Silicon-based active material content (relative to total weight of active material) | CMC |
| Example 1 | 100% | - | Li-CMC | 90% | SiO 10% | Li-CMC |
| Example 2 | 100% | - | Na-CMC | 90% | SiO 10% | Li-CMC |
| Example 3 | 100% | - | Li-CMC | 90% | SiO 10% | Na-CMC |
| Comparative Example 1 | 90% | SiO 10% | Li-CMC | 100% | - | Li-CMC |
| Comparative Example 2 | 95% | SiO 5% | Li-CMC | 95% | SiO 5% | Li-CMC |
| Comparative Example 3 | 100% | - | Na-CMC | 90% | SiO 10% | Na-CMC |
| Comparative Example 4 | 100% | - | Na-CMC | 100% | - | Na-CMC |
| Comparative Example 5 | 95% | SiO 5% | Li-CMC | - | - | - |
| Comparative Example 6 | 95% | SiO 5% | Na-CMC | - | - | - |

**[Table 2]**

| | Cell resistance performance (Ω, discharge 10 seconds 2.5 C pulse) | Cell charge C-rate performance (%, 2.0 C/0.1 C) |
|---|---|---|
| Example 1 | 1.766 | 97.8 |
| Example 2 | 1.783 | 97.4 |
| Example 3 | 1.821 | 97.1 |
| Comparative Example 1 | 1.845 | 96.1 |
| Comparative Example 2 | 1.837 | 96.8 |
| Comparative Example 3 | 1.898 | 95.9 |
| Comparative Example 4 | 2.003 | 91.3 |
| Comparative Example 5 | 1.838 | 96.7 |
| Comparative Example 6 | 1.921 | 95.5 |

As shown in Table 2, it can be confirmed that the Examples exhibit excellent effects compared to the cell resistance performance and cell charge C-rate performance of the Comparative Examples. In addition the cells manufactured according to the Examples also maintained an excellent service life performance.

## Claims

1. A negative electrode for a secondary battery, comprising: a current collector;
a first negative electrode active material layer provided on the current collector; and
a second negative electrode active material layer provided on the first negative electrode active material layer,
wherein one or two of the first and second negative electrode active material layers comprises a lithium-substituted carboxymethyl cellulose,
wherein the first negative electrode active material layer comprises a carbon-based active material, and
wherein only the second negative electrode active material layer comprises a silicon-based active material;
the silicon-based active material is included in an amount of 1 part by weight to 7 parts by weight based on total 100 parts by weight of the active materials included in the second negative electrode active material layer.

2. The negative electrode according to claim 1, wherein the negative electrode active material layer comprising the silicon-based active material further comprises a carbon-based active material.

3. The negative electrode according to any of claims 1 or 2, wherein both the first negative electrode active material layer and the second negative electrode active material layer comprise a lithium-substituted carboxymethyl cellulose.

4. The negative electrode according to any of claims 1 to 3, wherein the carbon-based active material comprises one or both of artificial graphite and natural graphite.

5. The negative electrode according to any of claims 1 to 4, wherein the silicon-based active material comprises one or more of SiOx (0≤x<2), SiMy (M is a metal, 1≤y≤4), and Si/C.

6. The negative electrode according to any of claims 1 to 5, wherein the silicon-based active material comprises silicon-based composite particles including SiOₓ (0<x<2).

7. The negative electrode according to claim 6, wherein silicon-based composite particles further comprise one or more of a Mg compound and a Li compound.

8. The negative electrode according to claim 7, wherein the Mg compound is at least one selected from the group consisting of Mg silicates, Mg silicides and Mg oxides; and wherein the Li compound Li compound is at least any one selected from the group consisting of Li silicates, Li silicides and Li oxides.

9. The negative electrode according to any of claims 1 to 8, wherein the sum of weights of the first and second negative electrode active material layers is 170 to 280 mg/25 cm².

10. The negative electrode according to any of claims 1 to 8, wherein the first negative electrode active material layer comprises:
an amount of 80 parts by weight or more and 99.8 parts by weight or less of carbon-based negative electrode active material; and
an amount of 0.1 to 5 parts by weight of lithium-substituted carboxymethyl cellulose;
the amounts based on 100 parts by weight of the total weight of the first and second negative electrode active material layers.

11. The negative electrode according to any of claims 1 to 8, wherein the second negative electrode active material layer comprises an amount of 85 parts by weight or more and 99 parts by weight or less of carbon-based negative electrode active material, based on total 100 parts by weight of the active materials included in the second negative electrode active material layer.

12. The negative electrode according to any of claims 1 to 8, wherein the second negative electrode active material layer comprises an amount of 0.1 to 5 parts by weight of lithium-substituted carboxymethyl cellulose based on 100 parts by weight of the total weight of the first and second negative electrode active material layers.

13. A secondary battery comprising the negative electrode according to any one of claims 1 to 12, a positive electrode, and a separator.

14. The secondary battery of claim 13, wherein the positive electrode comprises a lithium composite transition metal compound comprising nickel (Ni) and cobalt (Co) as an active material.

15. The secondary battery of claim 13, wherein the lithium composite transition metal compound further comprises one or both of manganese and aluminum.
